# EUROPÄISCHE PATENTSCHRIFT

(11) **EP 1 593 902 B1**
(45) Veröffentlichungstag und Bekanntmachung des Hinweises auf die Patenterteilung: **24.09.2008**
(21) Anmeldenummer: 05007373.3
(22) Anmeldetag: 05.04.2005
(51) Int. Cl.: F16M 7/00, D06F 39/12

(54) **Hausgerät, wie Wasch- oder Geschirrspülgerät mit einem Höhenverstellbaren Fuss, mit einem Schaft der standseitig mit einem Fussteller bestückt ist**
Household appliance,such as washing or dishwashing machine, with a height adjustable foot, with an axle equipped with a cup base
Appareils domestique, tel que lave-linge ou lave-vaisselle, avec un pied à hauteur réglable, avec un axe muni d'une semelle de base

(30) Priorität: 05.05.2004 DE 102004022681
(43) Veröffentlichungstag der Anmeldung: 09.11.2005
(73) Patentinhaber: Miele & Cie. KG, 33332 Gütersloh (DE)
(72) Erfinder: Thülig, Markus, 59269 Beckum (DE)

(56) Entgegenhaltungen:
- EP-A- 0 503 701
- DE-U1- 8 908 536
- US-A- 4 991 805

## Beschreibung

Hausgerät wie Wasch- oder Geschirrspülgerät mit einem höhenverstellbaren Fuß, mit einem Schaft der standseitig mit einem Fußteller bestückt ist.

Die Erfindung betrifft ein Hausgerät, wie Wasch- oder Geschirrspülgerät mit einem höhenverstellbaren Fuß mit einem Schaft, über dessen Erstreckung ein Außengewinde angebracht ist, welches mit einem Innengewinde eines Zahnkranzes zusammenwirkt, der drehbar gegenüber dem Gerätegehäuse abgestützt ist, und wobei mit dem Zahnkranz ein über eine Verstellstange betätigbares Ritzel in Wirkverbindung steht, so dass bei Betätigung des Ritzels der verdrehgesicherte Schaft des Fußes eine translatorische Bewegung vollzieht.

Bei Hausgeräten, insbesondere bei Geschirrspülgeräten, unterscheidet man zwischen sogenannten freistehenden Geschirrspülern und zwischen in einer Küchenzeile integrierten Einbaugeschirrspülgeräten. Beide Gerätetypen verfügen dabei über höhenverstellbare Füße, um für eine gegebene Standsicherheit das Gerät gegenüber Bodenunebenheiten ausrichten zu können. So verfügt beispielsweise das in eine Küchenzeile integrierbare Geschirrspülgerät über höhenverstellbare rückwärtig angeordnete Füße, die von der Frontseite des Gerätes her über eine Verstellstange verstellt werden können.

Ein derartig von der Frontseite her zu betätigender rückwärtiger Fuß ist beispielsweise aus der US 4,991,805 bekannt, wobei der höhenverstellbare Fuß über einen Schaft verfügt, der standseitig mit einem Fußteller bestückt ist. Über die Erstreckung des Schaftes ist ein Außengewinde angebracht, welches mit einem Innengewinde eines Zahnkranzes zusammenwirkt. Der Zahnkranz ist drehbar gegenüber dem Gerätegehäuse abgestützt, so dass über den Zahnkranz die Stützkraft an das Gehäuse übertragen wird. Mit dem Zahnkranz steht ein über eine Verstellstange betätigbares Ritzel in Wirkverbindung, so dass bei Betätigung des Ritzels der verdrehgesicherte Schaft des Fußes eine translatorische Bewegung vollzieht.

Ist also der integrierbare Geschirrspüler in eine Küchenzeile eingeschoben, so kann von der Frontseite her über die Verstellstange eine Höhenverstellung des rückwärtigen, nicht zugänglichen Fußes erfolgen, um auf diese Weise den rückwärtigen Bereich des Geschirrspülers auszurichten, damit die notwendige Standsicherheit für das Gerät gegeben ist.

Bei dieser nach dem Stand der Technik bekannten Ausführung wird es als nachteilig angesehen, dass eine Höhenverstellung des Fußes ausschließlich nur über ein Ritzel in Verbindung mit einer Verstellstange vorgenommen werden kann. Eine unmittelbare Verstellung des Fußes bei direktem Zugang, wie dies bei einem freistehenden Gerät möglich ist, lässt sich bei der beschriebenen Ausführung nicht vollziehen.

Der Erfindung stellt sich somit das Problem, ein Hausgerät mit einem höhenverstellbaren Fuß bereit zu stellen, der die Möglichkeit eröffnet, dass der höhenverstellbare Fuß einerseits über eine Verstellvorrichtung zu betätigen ist und der andererseits direkt durch Verdrehen des Schaftes bei gegebener Zugänglichkeit verstellt werden kann.

Erfindungsgemäß wird dieses Problem mit den Merkmalen des Anspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen im Wesentlichen darin, dass Baugruppen von Hausgeräten, also hier freistehende Geschirrspülgeräte und integrierbare Geschirrspülgeräte, mit ein und demselben höhenverstellbaren Fuß ausgestattet werden können, also Baugruppen in einfacher und vorteilhafter Weise zusammengefasst werden können.

Hierzu wird vorgeschlagen, dass das freie Ende der Verstellstange durch die Drehachse des Ritzels ragt und in eine am Schaft befindliche Längsnut greift, so dass der Schaft für eine mittelbare translatorische Verstellung über die Verstellstange gegenüber dem Zahnkranz in einer ersten Lage im Gerätegehäuse verdrehgesichert gelagert ist und wobei der Zahnkranz derart ausgebildet ist, dass er in einer zweiten Lage gegen Verdrehung gesichert ist und damit eine unmittelbare Verstellung des Schaftes zulässt. Hierzu wird lediglich der Zahnkranz durch Wenden um 180° in die erste oder zweite Lage verbracht, um auf diese Weise die mittelbare oder die unmittelbare Betätigung des Fußes bereit zu stellen bzw. zu ermöglichen.

Gemäß einer vorteilhaften Weiterbildung der Erfindung ist in dem Gerätegehäuse ein kammerartiger Bereich vorgesehen, in dem der Zahnkranz entweder für die erste oder die zweite Lage von außen her einschiebbar ist. Ist es beabsichtigt, dass der Zahnkranz entweder die mittelbare oder die unmittelbare Verstellung herbeiführen soll, so ist lediglich der Zahnkranz in seiner Lage entsprechend in dem kammerartigen Bereich vorzusehen.

Der Zahnkranz als solches ist dabei in der Kammer derart eingebunden, dass er für die mittelbare Verstellung frei drehbar gelagert ist, wohingegen er für die unmittelbare Verstellung formschlüssig in der Kammer fixiert ist. Hierzu weist der Zahnkranz einen oberen Ansatz und einen unteren Ansatz auf, wobei der obere Ansatz eine Formschlussverbindung mit der Kammer eingeht, derart, dass beispielsweise die Kammerwände maulschlüsselartig an dem oberen Ansatz anliegen und somit die Verdrehsicherheit gewährleisten. Im Unterschied dazu ermöglicht der untere Ansatz die Drehbarkeit des Zahnkranzes in der Kammer wenn der Zahnkranz um 180° gewendet ist, und er somit eine andere Lage einnimmt.

Der obere Ansatz weist flach ausgebildete Bereiche auf, die mit in der Kammer eingeformten Stufenbereichen zur verdrehgesicherten Lagerung in Wirkverbindung treten. Wie bereits schon gesagt, wirken hierbei die Stufenbereiche wie eine Art fest stehender Maulschlüssel auf den eingeschobenen Zahnkranz. Um die freie Drehbarkeit zu gewährleisten ist der untere Ansatz als Hülse ausgebildet, deren Erstreckung größer ist als die Stufenhöhe, so dass insbesondere die Zähne oberhalb des Stufenbereiches zu liegen kommen, und sich in der Kammer ungehindert bewegen können.

Der Aufbau des Zahnkranzes mit oberen und unterem Ansatz nimmt etwa die Höhe der Kammer ein, so dass der Deckenbereich der Kammer als Stütze für den Zahnkranz und somit für den Fuß bei mittelbarer als auch bei unmittelbarer Verstellung wirkt.

Ein Ausführungsbeispiel der Erfindung ist in den Zeichnungen rein schematisch dargestellt und wird nachfolgend näher beschrieben. Es zeigen:
- Figur 1: eine perspektivische Darstellung eines erfindungsgemäßen höhenverstellbaren Fußes;
- Figur 2: eine perspektivische Darstellung in Draufsicht eines Zahnkranzes;
- Figur 3: eine geschnittene Darstellung des mittelbar verstellbaren Fußes;
- Figur 4: eine Detailansicht des Zahnkranzes in einer ersten Lage zur mittelbaren Verstellung;
- Figur 5: eine weitere Darstellung des Zahnkranzes in einer zweiten Lage für die unmittelbare Verstellung des Schaftes.

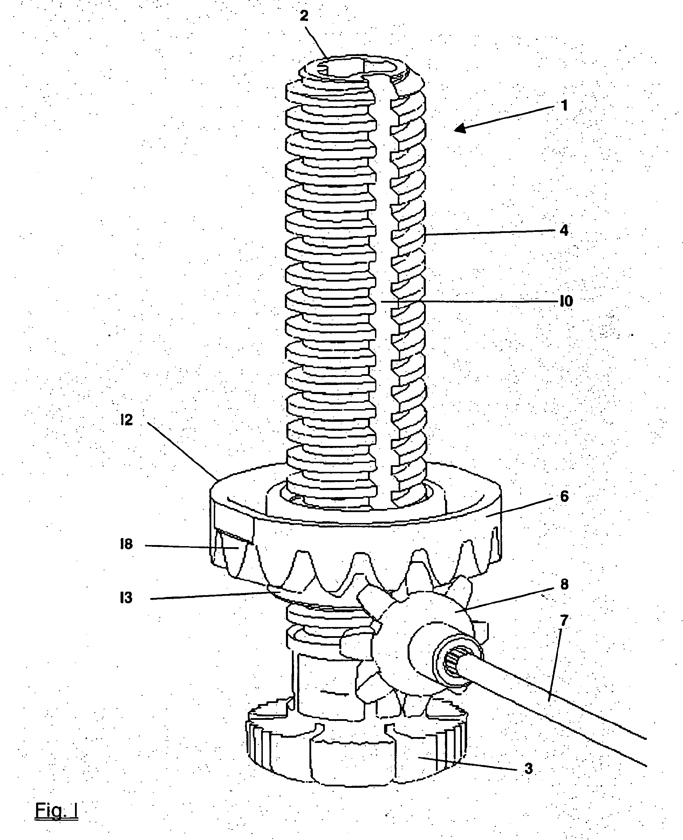

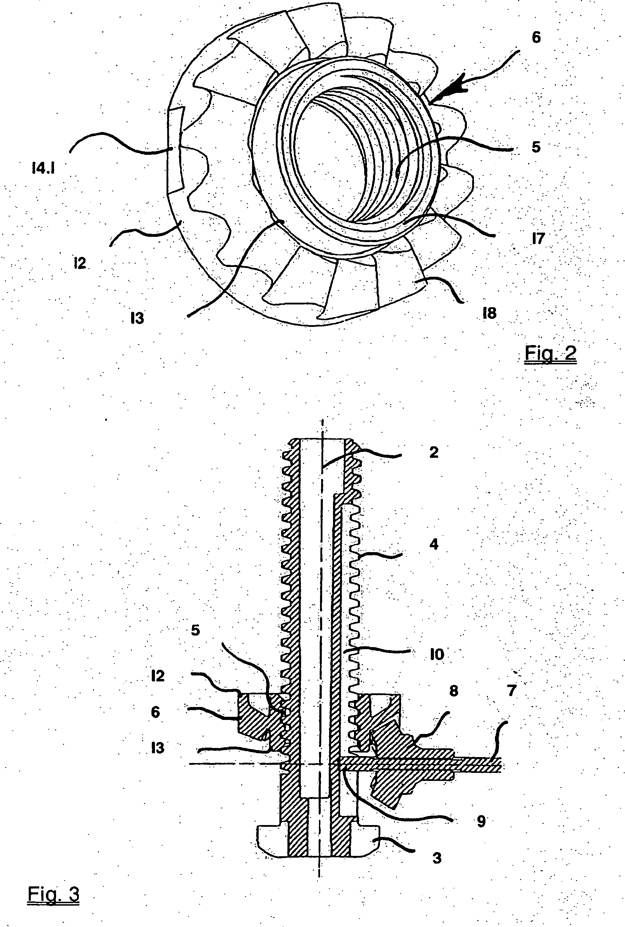

Die Figur 1 zeigt in isolierter Darstellung einen verstellbaren Fuß 1 für Hausgeräte, wie Wasch- oder Geschirrspülgeräte, wobei der höhenverstellbare Fuß 1 gebildet wird von einem Schaft 2, der standseitig beispielsweise wie aus der Figur 1 zu erkennen ist, einen angeformten Fußteller 3 hat. Wie aus der Figur 1 zu erkennen ist, ist über die Erstreckung des Schaftes 2 ein Außengewinde 4 angebracht, welches mit einem Innengewinde 5 eines Zahnkranzes 6 zusammenwirkt, deutlicher zu erkennen in der Einzelansicht der Figur 2, wo der Zahnkranz 6 in perspektivischer Darstellung abgebildet ist. Der Zahnkranz 6 stützt sich dabei gegenüber dem Gerätegehäuse ab, wobei mit dem Zahnkranz 6 ein über eine Verstellstange 7 betätigbares Ritzel 8 in Wirkverbindung steht; so dass bei Betätigung des Ritzels 8 der verdrehgesicherte Schaft 2 des Fußes 1 eine translatorische Bewegung gegenüber dem nicht näher dargestellten Gerätegehäuse vollzieht.

Wie aus der geschnittenen Darstellung der Figur 3 näher zu erkennen ist, ragt das freie Ende 9 der Verstellstange 7 durch die Drehachse des Ritzels 8 und greift in eine am Schaft 2 befindliche Längsnut 10, so dass der Schaft 2 für die in der Figur 1, 3 und 4 dargestellten Ausführung verdrehsicher gelagert ist, und eine mittelbare translatorische Verstellung über die Verstellstange 7 gegenüber dem Zahnkranz 6 in einer ersten Lage im Gerätegehäuse vorgenommen werden kann. Die Längsnut 10 erstreckt sich nicht bis zum Ende des Schaftes 2, so dass dieser nicht vollständig aus dem Zahnkranz 8 herausbewegt werden kann.

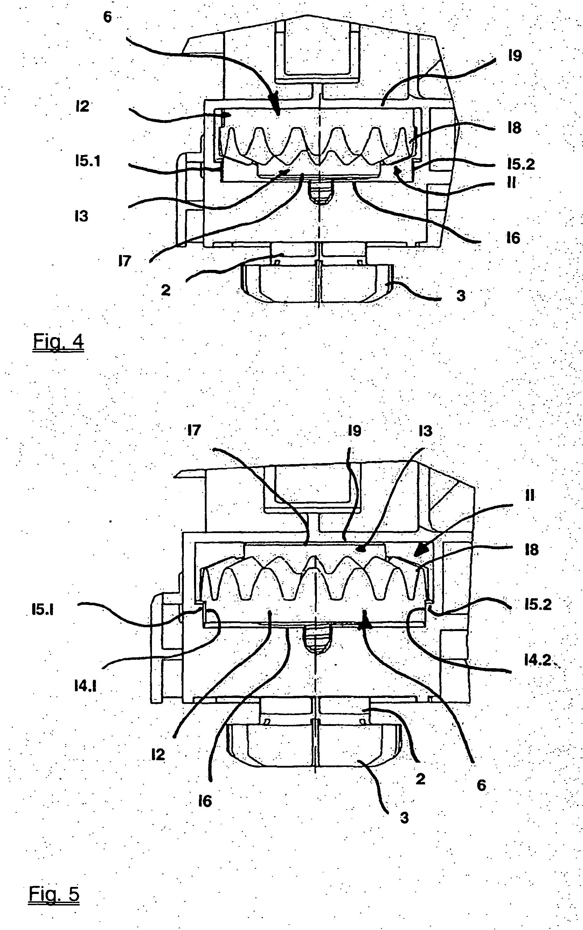

Die Figur 5 zeigt den Zahnkranz 6 in einer zweiten Lage, die insbesondere die unmittelbare Verstellung des Schaftes 2 zulässt, in dem in einfacher Weise der Zahnkranz 6 durch Wenden um 180° in die zweite Lage verbracht wird. Wie in den Figuren 4 und 5 deutlicher zu erkennen ist, ist in dem Gerätegehäuse ein kammerartiger Bereich 11 vorgesehen, in den der Zahnkranz 6 entweder für die erste Lage (Figur 4) oder die zweite Lage (Figur 5) von außen her einschiebbar ist. Wie aus der Zusammenschau der Figuren 4 und 5 deutlich wird, ist der Zahnkranz 6 in der Kammer 11 derart eingebunden, dass er für die mittelbare Verstellung frei drehbar gelagert ist, wobei er für die unmittelbare Verstellung formschlüssig in der Kammer 11 eingebunden ist, dargestellt in der Figur 5.

Hierzu weist der Zahnkranz 6 einen oberen Ansatz 12 und einen unteren Ansatz 13 auf, wobei der obere Ansatz 12 eine Formschlussverbindung mit der Kammer 11 eingeht und wohingegen der untere Ansatz 13 die Drehbarkeit (Figur 4) des Zahnkranzes 6 in der Kammer 11 ermöglicht. Wie aus der perspektivischen Darstellung der Figur 2, wo der Zahnkranz 6 in Einzelansicht dargestellt ist, zu erkennen ist, weist der obere Ansatz 12 flach ausgebildete Bereiche 14.1 und 14.2, sogenannte Flanken, auf, die mit in der Kammer 11 eingeformten Stufenbereichen 15.1 und 15.2 zur verdrehgesicherten Lagerung in Wirkverbindung treten. Wie aus der Figur 5 zu erkennen ist, wirken dabei die eingeformten Stufenbereiche 15.1 und 15.2 wie eine Art festgelegter Maulschlüssel an den Flanken des oberen Ansatzes 12. Es versteht sich daher von selbst, dass in dieser Lage eine Verdrehsicherung in Folge der Formschlusseinbindung gegeben ist.

Wird nun der Zahnkranz 6 um 180° gedreht, so liegt auf dem Kammerboden 16 der untere Ansatz 13, der als Hülse 17 ausgebildet ist, wobei dessen Erstreckung, wie aus der Figur 4 zu erkennen ist, größer ausgebildet ist als die Stufenhöhe der eingeformten Stufenbereiche 15.1 und 15.2 in der Kammer 11. Somit liegen die Zähne 18 oberhalb des Stufenbereichs 15.1 und 15.2, wobei in dieser Lage die freie Drehbarkeit des Zahnkranzes 6 in der Kammer 11 gewährleistet wird.

Damit insbesondere der Zahnkranz 6 in der Kammer 11 auch seine hinreichende Stützwirkung erhält, nimmt der Aufbau des Zahnkranzes 6 mit oberen und unteren Ansatz 12 und 13 etwa die Höhe der Kammer 11 ein, so dass durch den Deckenbereich 19 der Kammer 11 einerseits eine Stützwirkung für den Zahnkranz 6 bei mittelbarer als auch bei unmittelbarer Verstellung gegeben ist, die sich auf den Fuß 1 überträgt.

Es versteht sich nun von selbst, dass, wenn beispielsweise die Verstellstange 7 mit dem Ritzel 8 demontiert wird und der Schaft 2 aus dem Innengewinde 5 des Zahnkranzes 6 herausgedreht wird, dann der Zahnkranz 6 aus der Kammer 11 herausgeholt werden kann, um ihn in gewendeter Stellung wieder in die Kammer 11 einzuschieben, so dass der Zahnkranz 6 die formschlüssige Verbindung mit der Kammer 11 eingeht. Der Fuß 1 kann dann eingedreht werden, wobei die Krafteinwirkung unmittelbar an dem Fuß 1 aufgebracht werden kann.

## Patentansprüche

1. Hausgerät, wie Wasch- oder Geschirrspülgerät umfassend ein Gerätgehaüse mit einem höhenverstellbaren Fuß (1) mit einem Schaft (2), über dessen Erstreckung ein Außengewinde (4) angebracht ist, welches mit einem Innengewinde (5) eines Zahnkranzes (6) zusammenwirkt, der drehbar gegenüber dem Gerätegehäuse abgestützt ist, und wobei mit dem Zahnkranz (6) ein über eine Verstellstange (7) betätigbares Ritzel (8) in Wirkverbindung steht, so dass bei Betätigung des Ritzels (8) der verdrehgesicherte Schaft (2) des Fußes (1) eine translatorische Bewegung vollzieht,
**dadurch gekennzeichnet,**
**dass** das freie Ende (9) der Verstellstange (7) durch die Drehachse des Ritzels (8) ragt und in eine am Schaft (2) befindliche Längsnut (10) greift, so dass der Schaft (2) für eine mittelbare translatorische Verstellung über die Verstellstange (7) gegenüber dem Zahnkranz (6) in einer ersten Lage im Gerätegehäuse verdrehgesichert ist, und wobei der Zahnkranz (6) derart ausgebildet ist, dass er in einer zweiten Lage gegen Verdrehung gesichert ist und damit eine unmittelbare Verstellung des Schaftes (2) zulässt.

2. Hausgerät mit einem höhenverstellbaren Fuß (1) nach Anspruch 1,
**dadurch gekennzeichnet,**
**dass** der Zahnkranz (6) durch Wenden um 180° entweder die mittelbare Verstellung oder die unmittelbare Verstellung des Schaftes (2) ermöglicht.

3. Hausgerät mit einem höhenverstellbaren Fuß (1) nach Anspruch 2,
**dadurch gekennzeichnet,**
**dass** in dem Gerätegehäuse ein kammerartiger Bereich (11) vorgesehen ist , in den der Zahnkranz (6) entweder für die erste oder die zweite Lage von außen her einschiebbar ist.

4. Hausgerät mit einem höhenverstellbaren Fuß (1) nach Anspruch 3,
**dadurch gekennzeichnet,**
**dass** der Zahnkranz (6) in der Kammer (11) derart eingebunden ist, dass er für die mittelbare Verstellung frei drehbar gelagert ist und wobei er für die unmittelbare Verstellung formschlüssig in der Kammer (11) eingebunden ist.

5. Hausgerät mit einem höhenverstellbaren Fuß (1) nach Anspruch 4,
**dadurch gekennzeichnet,**
**dass** der Zahnkranz (6) einen oberen Ansatz (12) und unteren Ansatz (13) aufweist, wobei der obere Ansatz (12) eine Formschlussverbindung mit der Kammer (11) eingeht und wohingegen der untere Ansatz (13) die Drehbarkeit des Zahnkranzes (6) in der Kammer (11) ermöglicht.

6. Hausgerät mit einem höhenverstellbaren Fuß (1) nach Anspruch 5,
**dadurch gekennzeichnet,**
**dass** der obere Ansatz (12) flach ausgebildete Bereiche (14.1) und (14.2) aufweist, die mit in der Kammer (11) eingeformten Stufenbereichen (15.1) und (15.2) zur verdrehgesicherten Lagerung in Wirkverbindung treten, wohingegen der untere Ansatz (13) als Hülse (17) ausgebildet ist, deren Erstreckung größer ausgebildet ist als die Stufenhöhe für die Drehbarkeit des Zahnkranzes (6) in der Kammer (11).

7. Hausgerät mit einem höhenverstellbaren Fuß (1) nach Anspruch 6,
**dadurch gekennzeichnet,**
**dass** der Aufbau des Zahnkranzes (6) mit oberen und unterem Ansatz (12, 13) etwa die Höhe der Kammer (11) einnimmt so dass der Deckenbereich (19) der Kammer (11) eine Stützwirkung für den Zahnkranz (6) bei mittelbarer als auch bei unmittelbarer Verstellung hat.

## Claims

1. Domestic appliance, such as a washing machine or dishwasher, comprising an appliance housing with a height adjustable foot (1) with a shaft (2), there being provided, over the extension of the said shaft, an external thread (4), which interacts with an internal thread (5) of a sprocket (6), which is supported so as to be rotatable relative to the appliance housing, and wherein a pinion (8) that is actuatable by means of an adjusting rod (7) is in operative connection with the sprocket (6) such that when the pinion (8) is actuated, the shaft (2) of the foot (1), secured against twisting, completes a translatory movement, **characterised in that** the free end (9) of the adjusting rod (7) extends through the axis of rotation of the pinion (8) and engages an elongate groove (10) located on the shaft (2), such that the shaft (2), for an indirect translatory adjustment by means of the adjusting rod (7), is secured against twisting relative to the sprocket (6) in a first position in the appliance housing, and wherein the sprocket (6) is configured in such a manner that it is secured against twisting in a second position and consequently permits a direct adjustment of the shaft (2).

2. Domestic appliance with a height adjustable foot (1) according to claim 1, **characterised in that** the sprocket (6), by turning about 180°, enables either the indirect adjustment or the direct adjustment of the shaft (2).

3. Domestic appliance with a height adjustable foot (1) according to claim 2, **characterised in that** a chamber-like region (11) is provided in the appliance housing and the sprocket (6) can be inserted from the exterior into the said chamber-like region either for the first or the second position.

4. Domestic appliance with a height adjustable foot (1) according to claim 3, **characterised in that** the sprocket (6) is incorporated in the chamber (11) in such a manner that it is mounted so as to be freely rotatable for the indirect adjustment and wherein it is incorporated in the chamber (11) in a positive locking manner for the direct adjustment.

5. Domestic appliance with a height adjustable foot (1) according to claim 4, **characterised in that** the sprocket (6) includes an upper shoulder (12) and a lower shoulder (13), wherein the upper shoulder (12) provides a positive locking connection to the chamber (11) and where, contrary to this, the lower shoulder (13) enables the rotatability of the sprocket (6) in the chamber (11).

6. Domestic appliance with a height adjustable foot (1) according to claim 5, **characterised in that** the upper shoulder (12) includes flat regions (14.1) and (14.2), which enter into operative connection with stepped regions (15.1) and (15.2) moulded in the chamber (11) for the mounting arrangement secured against rotation, wherein, contrary to this, the lower shoulder (13) is in the form of a sleeve (17), the extension of which is greater than the height of the step for the rotatability of the sprocket (6) in the chamber (11).

7. Domestic appliance with a height adjustable foot (1) according to claim 6, **characterised in that** the design of the sprocket (6) with upper and lower shoulder (12, 13) assumes approximately the height of the chamber (11) such that the ceiling region (19) of the chamber (11) performs a supporting effect for the sprocket (6) for both direct and indirect adjustment.

## Revendications

1. Appareil ménager, tel que lave-linge ou lave-vaisselle, comprenant un boîtier d'appareil muni d'un pied (1) réglable en hauteur ayant un corps (2) sur l'étendue duquel est ménagé un filetage extérieur (4) qui coopère avec un filetage intérieur (5) d'une couronne dentée (6) qui est soutenue à rotation par rapport au boîtier d'appareil, sachant qu'un pignon (8) pouvant être actionné au moyen d'une tige de réglage (7) est fonctionnellement relié à la couronne dentée (6), de sorte que, lors de l'actionnement du pignon (8), le corps (2) bloqué en rotation du pied (1) accomplit un mouvement de translation,
**caractérisé en ce que** l'extrémité libre (9) de la tige de réglage (7) traverse l'axe de rotation du pignon (8) et s'engage dans une rainure longitudinale (10) présente sur le corps (2), de sorte que, dans une première position, le corps (2) est bloqué en rotation par rapport à la couronne dentée (6) dans le boîtier d'appareil pour un déplacement indirect en translation au moyen de la tige de réglage (7), sachant que la couronne dentée (6) est conçue de telle sorte que, dans une seconde position, elle est bloquée en rotation et autorise ainsi un déplacement direct du corps (2).

2. Appareil ménager avec un pied (1) réglable en hauteur selon la revendication 1, **caractérisé en ce que** la couronne dentée (6) permet, par retournement à 180°, soit le déplacement indirect soit le déplacement direct du corps (2).

3. Appareil ménager avec un pied (1) réglable en hauteur selon la revendication 2, **caractérisé en ce qu'**une région du genre chambre (11) est prévue dans le boîtier d'appareil, dans laquelle la couronne dentée (6) peut être insérée de l'extérieur soit pour la première, soit pour la seconde position.

4. Appareil ménager avec un pied (1) réglable en hauteur selon la revendication 3, **caractérisé en ce que** la couronne dentée (6) est installée dans la chambre (11) de telle sorte qu'elle est montée à libre rotation pour le déplacement indirect, tandis qu'elle est engagée positivement dans la chambre (11) pour le déplacement direct.

5. Appareil ménager avec un pied (1) réglable en hauteur selon la revendication 4, **caractérisé en ce que** la couronne dentée (6) présente un épaulement supérieur (12) et un épaulement inférieur (13), sachant que l'épaulement supérieur (12) entre en engagement positif avec la chambre (11), tandis que l'épaulement inférieur (13) permet la rotation de la couronne dentée (6) dans la chambre (11).

6. Appareil ménager avec un pied (1) réglable en hauteur selon la revendication 5, **caractérisé en ce que** l'épaulement supérieur (12) présente des régions réalisées plates (14.1 et 14.2) qui entrent en liaison fonctionnelle avec des régions en gradins (15.1 et 15.2) ménagées dans la chambre (11) pour le montage bloqué en rotation, tandis que l'épaulement inférieur (13) est réalisé sous forme de douille (17) dont l'étendue est réalisée plus grande que la hauteur des gradins, pour permettre la rotation de la couronne dentée (6) dans la chambre (11).

7. Appareil ménager avec un pied (1) réglable en hauteur selon la revendication 6, **caractérisé en ce que** la structure de la couronne dentée (6) avec l'épaulement supérieur (12) et l'épaulement inférieur (13) occupe environ la hauteur de la chambre (11), de sorte que la région de recouvrement (19) de la chambre (11) exerce une action de soutien pour la couronne dentée (6) tant pour le déplacement direct que pour le déplacement indirect.
